# EUROPEAN PATENT SPECIFICATION

(11) **EP 3 751 134 B1**
(45) Date of publication and mention of the grant of the patent: **27.04.2022**
(21) Application number: 20176580.7
(22) Date of filing: 26.05.2020
(51) Int. Cl.: F03D 13/20, F03D 80/80

(54) **DEVICE FOR ELECTROMAGNETIC SHIELDING IN A TOWER OF A WIND TURBINE**
VORRICHTUNG ZUR ELEKTROMAGNETISCHEN ABSCHIRMUNG IN EINEM TURM EINER WINDTURBINE
DISPOSITIF DE BLINDAGE ÉLECTROMAGNÉTIQUE DANS UNE TOUR D'ÉOLIENNE

(30) Priority: 11.06.2019 DE 102019115861
(43) Date of publication of application: 16.12.2020
(73) Proprietor: Nordex Energy SE & Co. KG, 22419 Hamburg (DE)
(72) Inventor: Eppler, Christian, 18109 Rostock (DE); Kremer, Jochen, 22299 Hamburg (DE); Staack, Robert, 99867 Gotha (DE)
(74) Representative: Hauck Patentanwaltspartnerschaft mbB

(56) References cited:
- EP-A1- 2 378 850
- EP-B1- 2 378 850
- EP-B1- 2 859 228
- WO-A2-2018/135940
- US-A1- 2011 181 127

## Description

The present invention relates to electromagnetic shielding in a tower of a wind turbine. Cables in the tower of a wind turbine act like an antenna, wherein a tubular steel tower for the wind turbine acts like a Faraday cage. In order to minimize the radiation of the cables, different steps and measures are known.

WO 2008/006377 A1 proposes a conductive layer in the enclosure of the nacelle, as a result of which the latter also becomes a Faraday cage which prevents emitted radiation.

A lightning arrester system which is surrounded with an element for reducing electromagnetic radiation is provided in WO 2008/092464 A2.

An EMC protection system for electrical cables in a tower, in which the cables are arranged in a U-shaped shield which is routed along the inside of a tower as a cable duct, is known from EP 2 378 850 A1.

It is known from WO 2013/182199 A2 as well as EP 2 859 228 B1 to route cables coming from the tower in stainless steel tubes in the nacelle, in order to thus ensure electromagnetic shielding.

A wind turbine, in which the interior of the nacelle is electromagnetically shielded by using slip rings between the nacelle and the rotor, has become known from WO 2018/135940 A2.

It is also known, in order to attenuate the radiated interference originating from cables, that the cables should be routed through annular interference suppression cores (ferrite cores). Due to their inductance, these act like a choke.

The electrical energy generated in a wind turbine is carried off by cables which, at least in the upper region of the tower below the nacelle of the wind turbine, are routed hanging in the middle of the tower. This arrangement, which is known as a cable loop, makes it possible for the nacelle and the rotor to be yawed for changing wind directions without damaging the cables. During the operation of the wind turbine, lateral pendular movements of the entire turbine and the cables hanging below the nacelle in the tower can also occur.

The object which forms the basis of the invention is to achieve a good attenuation of the electromagnetic radiation from the interior of the tower for as large a frequency range as possible. A further object of the invention is to make possible the movements occurring during the operation of the wind turbine.

According to the invention, the objects are achieved by a device having the features of Claim 1. Advantageous configurations form the subject matter of the sub-claims.

The device according to the invention is used for electromagnetic shielding in a tower of a wind turbine. The tower has, immediately below the nacelle, a platform terminating the inside of the tower having an aperture for one or more cables, wherein a cable ducting arrangement is provided, which can rotate relative to the tower with the cable or cables. According to the invention, the cable ducting arrangement has at least a two-part construction and has a rotatably arranged ring and a cover with one or more cable openings. The ring encloses the aperture of the platform and rests on a base fixed to the tower. A flexible element is additionally provided, which connects the cover to the ring and closes an intermediate space between these. Thus, there is no direct contact between the cover and the ring. According to the invention, the ring is equipped with a slip apparatus which, even during a rotation of the ring, establishes an electrically conducting connection to the base fixed to the tower. Thanks to the use of the flexible element between the cover and the ring, these can be moved against one another during loading of the wind turbine. The flexible element provided according to the invention is not permeable, or is only poorly permeable, to electromagnetic radiation. Thanks to the use of the shielding flexible element it can be ensured that electromagnetic radiation emitted by the cables in the tower and/or in the cable ducting arrangement is not emitted outwardly. The flexible element preferably completely covers an intermediate space or a gap space between the cover and the ring. Thanks to its flexible nature, the intermediate space or gap space is covered including if, for example, the nacelle, cable loop and tower move relative to one another under loading.

In a preferred embodiment of the invention, the aperture of the platform is shielded by the cable ducting arrangement for electromagnetic radiation in a pre-determined frequency range, wherein the pre-determined frequency range comprises electromagnetic radiation in the megahertz range. Radiation from 1 to 500 MHz, in particular from 10 to 300 MHz, is preferably shielded.

In another preferred embodiment, the flexible element is configured as an electrically conductive film, in particular metal film or metal-coated film or as an electrically conductive textile part, in particular as a textile woven fabric, knitted fabric, nonwoven fabric, crocheted fabric or something similar. It is crucial for the flexible nature that the form of the flexible element can be adapted and is tearproof. Even if, for example, the relative position between the cover and ring should change due to mechanical loads of the wind turbine, the flexible element arranged between these can prevent the occurrence of a gap, through which electromagnetic radiation can be emitted from the tower.

In order to avoid electrical potential differences between the ring as well as the base fixed to the tower, the slip apparatus is preferably equipped with electrical sliding contacts which establish an electrically conducting connection of the ring and the base fixed to the tower. The electrical sliding contacts preferably consist of spring elements which lie in contact, under pressure, with the base fixed to the tower, wherein the base fixed to the tower preferably has a good electrically conducting surface for the sliding contacts and their spring elements. In a preferred configuration, the slip apparatus comprises at least one sliding body, by which the ring slides on the base fixed to the tower.

In a preferred embodiment, a suspension bracket is provided, which connects the cover and the ring mechanically to one another in such a manner that when the cover is rotated a torque which rotates the ring is transferred by the suspension bracket to the ring. The suspension bracket preferably ensures that no forces are transferred by means of the flexible element arranged between the cover and the ring, such that damage of the flexible element is avoided. The suspension bracket between the cover and the ring can be configured in a number of different ways, for example a hook and eye design can be provided as the suspension bracket.

In a preferred embodiment, the cover has a circular disk which has cable openings along its circumference, which receive the cable or cables routed between the nacelle and the tower. Cable openings which are not used can, for example, be closed for better shielding with a plate electrically contacted to the cover or the like, such that electromagnetic radiation does not escape via free cable openings.

The flexible element is preferably held between the cover and the ring by means of at least one clamping ring which either rests on the cover and clamps the flexible element or rests on the ring and clamps the flexible element there. The flexible element is held in a clamping manner by means of one or two clamping rings and can in this way be easily assembled or exchanged, if required.

In a preferred embodiment, the aperture of the platform has a cylindrical enclosure which has a flange at its end pointing away from the platform, on which flange the ring of the cable ducting arrangement is arranged. Preferably the platform is configured to prevent a propagation of electromagnetic radiation through other openings or through a gap between the platform and the tower wall.

In a preferred embodiment, the cylindrical enclosure has one or more vent holes, the largest dimension of which is smaller than a maximum size predefined by the frequency to be shielded. For electromagnetic shielding there exists a maximum size for each frequency in such a way that electromagnetic radiation having said frequency cannot pass through an opening having the maximum size, or only significantly attenuated.

In a preferred embodiment, the cover is suspended on a central tube which rotates the cover together with the nacelle.

The present invention is explained below with reference to an exemplary embodiment, wherein:
- Fig. 1: shows a wind turbine having a tower and a nacelle in a view from the side,
- Fig. 2: shows the construction of an electromagnetically shielded cable ducting arrangement, and
- Fig. 3: shows a perspective view of a sectional view of the cable ducting arrangement from Fig. 2.

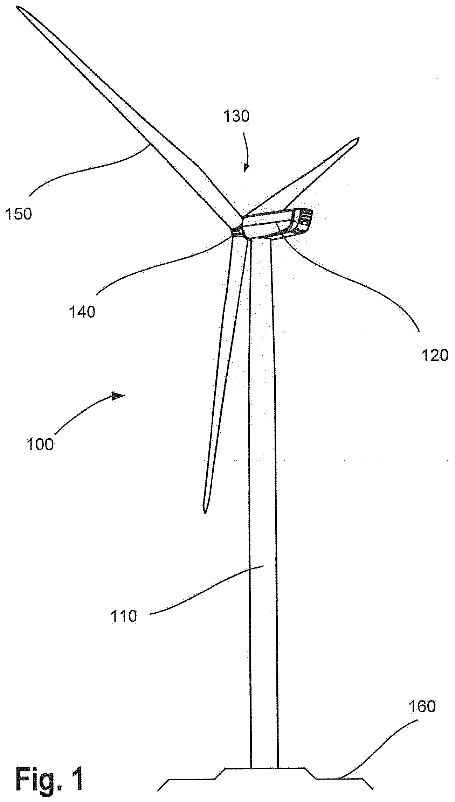

Fig. 1 shows a wind turbine 100 comprising a tower 110 and a nacelle 120 arranged on the tower. A rotor 130 is arranged on the nacelle 120 in such a manner that the rotor 130 can rotate about a substantially horizontal axis. The nacelle 120 is rotatably mounted about a longitudinal axis of the tower 110, in order to position the rotor 130 into the wind. The rotor 130 has a rotor hub 140, on which three rotor blades 150 are arranged. In the case of the wind turbine depicted in Fig. 1, the rotor 130 is rotated by the wind, as a result of which an electrical generator arranged in the nacelle 120 is operated. The electrical power generated by the electrical generator is conducted down by means of cables and/or by means of bus bars through the tower 110, wherein between the nacelle 120 and the tower 110 there is a transition from a pivoting component, i.e. the nacelle 120, to a non-pivoting component, i.e. the tower 110. The tower 110 is connected to a foundation 160.

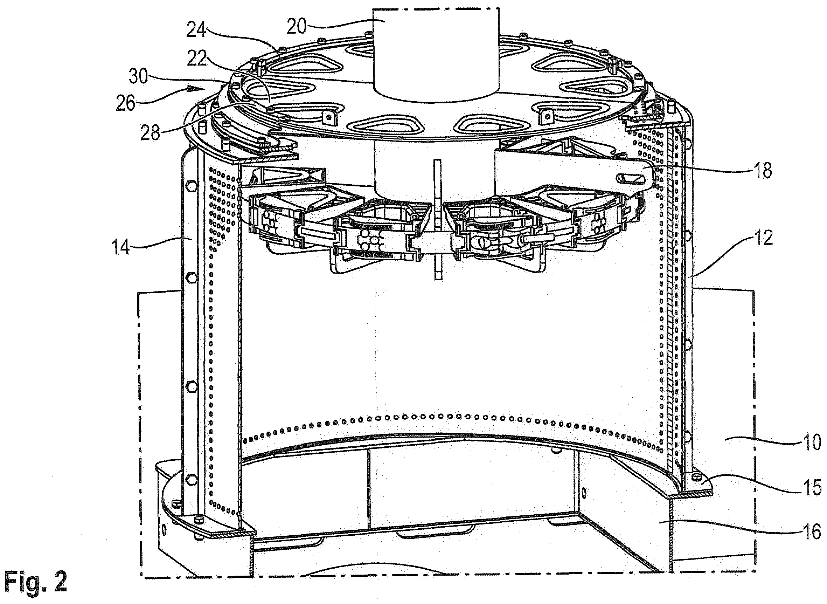

The cables in the tower 110 act electromagnetically like antennas, the electromagnetic radiation when a tubular steel tower is used being predominantly emitted in the transition region of the tower 110 and the nacelle 120. Fig. 2 shows a section of a platform 10 which is arranged in the upper region of the tower 110. The platform 10 consists of metal and therefore already has good shielding for electromagnetic radiation from the tower interior. Openings in the platform 10 are closed by metal lids or flaps having EMC seals in the joints and any gap between the platform 10 and the tower wall is likewise closed or does not exist, for example in that the platform 10 is welded to the tower wall. For the cable ducting arrangement, a cylindrical wall is provided as an enclosure 12 which consists of two or more segments made of electrically conducting material, in particular metal, which are connected to one another in the cylinder longitudinal direction by means of lateral flanges 14. The enclosure 12 is likewise connected by means of an outwardly protruding lower flange 15 to a corresponding support on the coaming edge 16 of the platform 10. All of the flange connections are equipped with seals which particularly shield electromagnetic radiation.

Within the enclosure 12 a cable carrying device 18 is provided, which carries and bundles the cables (not depicted) coming from the nacelle 120 for conveyance into the tower. The cable carrying device 18 hangs, for example, from a centrally arranged tube 20. The central tube 20 likewise carries a cover 22 consisting of an electrically conducting material, in particular metal, said cover having cable openings 24 distributed over the circumference. Thanks to the cable openings 24, the cables (not depicted) are routed individually or strand by strand to the cable carrying device 18. Beneath the cable carrying device 18, the cables (not depicted) are routed through absorption rings (not depicted). For effective shielding of the electromagnetic radiation originating from the interior of the tower, it is necessary, in particular, to seal the gap 26 between the cover 22 and the enclosure 12 in an EMC-effective manner.

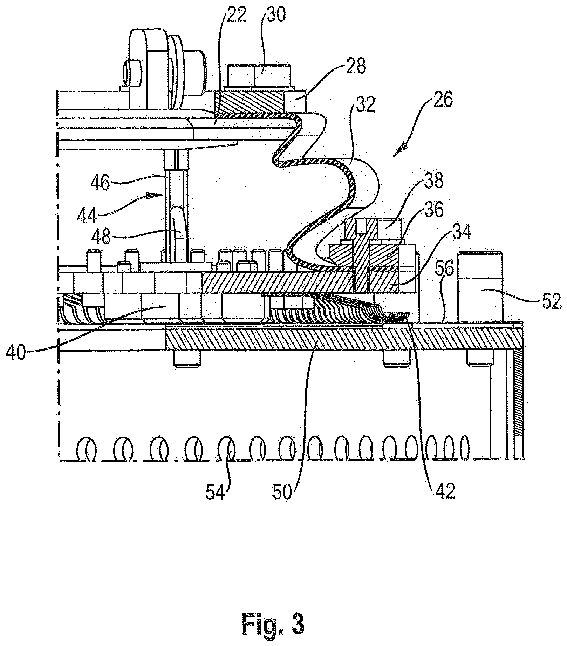

Fig. 3 shows the EMC-attenuating sealing of this intermediate space 26. The cover 22 has a clamping ring 28 resting thereon which is fastened on the cover 22 by means of bolts 30. The ring 28 resting thereon is configured as a clamping ring which fixes a flexible element 32 by tightening the screws 30. The flexible element 32 can, for example, be configured as an electrically conductive EMC textile nonwoven fabric which significantly shields electromagnetic radiation. The flexible element 32 is fastened to a ring 34 likewise by means of a clamping ring 36. The clamping ring 36 is connected to the lower ring 34 by means of screws 38. The ring 34 has spacing and sliding bodies 40 and contact fingers 42. The ring 34 is connected to the cover 22 by means of suspension brackets 44. The suspension brackets 44 each have an arrester cable 46 which is connected to an attachment eye 48.

During operation, the cover 22 rotates together with the nacelle 120, the tube 20, the cable carrying device 18 and the cables (not depicted). The rotating movement is transferred by the suspension brackets 44 to the ring 34. The flexible element 32 is not tensioned in the rotating direction, but remains in its unloaded condition. The ring 34 slides with the sliding bodies 40 on a contact surface formed by the upper flange 50 of the enclosure 12. An electrical contact of the ring 34 with the contact surface and, by means thereof, with the enclosure 12 is established by means of the contact fingers 42. In order to guarantee a good electrical contact, the contact fingers 42 consist of copper and the contact surface is coated with copper or covered with a copper sheet 56. Thanks to the weight of the ring 34, a sufficient contact pressure of the contact fingers 42 is ensured. The sliding bodies 40 serve as spacers between the ring 34 and the contact surface, in order to prevent excessive loading and, as a result, permanent deformation (plasticizing) of the contact fingers 42. The sliding bodies 40 can consist of a suitable conducting or non-conducting material such as, for example, a plastic.

Thanks to the use of the suspension bracket 44, the cover 22 and the ring 34 can move against one another. In the horizontal direction, the ring 34 follows the movement of the cover 22. The horizontal movement of the ring 34 is limited laterally by stops 52, which prevent too wide a movement outwardly.

Bores 54 which serve to carry off waste heat from the tower and, thus, avoid a heat accumulation, can also be seen in Fig. 3. In particular in situations, in which the cables are also shielded by absorption cores arranged at the end, heat is produced in the region of the enclosure 12 and immediately below the platform 10, which heat is to be dissipated, in order to prevent a heat accumulation. The diameter of the holes is preferably substantially smaller than the smallest wavelength to be shielded such that electromagnetic scatter fields cannot escape through the bore, or only significantly attenuated. The holes have a diameter of less than 1 cm, for example.

### List of reference numerals

- 10: Platform
- 12: Enclosure
- 14: Lateral flange
- 15: Lower flange
- 16: Coaming edge
- 18: Cable carrying system
- 20: Tube
- 22: Cover
- 24: Cable openings
- 26: Intermediate space
- 28: Clamping ring
- 30: Screw
- 32: Flexible element, EMC textile nonwoven fabric
- 34: Ring
- 36: Clamping ring
- 38: Screw
- 40: Sliding body
- 42: Sliding contact, contact finger
- 44: Suspension bracket
- 46: Arrester cable
- 48: Attachment eye
- 50: Upper flange
- 52: Stop
- 54: Bores
- 56: Copper sheet
- 100: Wind turbine
- 110: Tower
- 120: Nacelle
- 130: Rotor
- 140: Rotor hub
- 150: Rotor blades
- 160: Foundation

## Claims

1. A device for electromagnetic shielding in a tower (110) of a wind turbine (100), which has a platform (10) closing the inside of the tower (110) having an aperture for one or more cables, wherein a cable ducting arrangement (34, 22) is provided, which can pivot relative to the tower (110) with the cable or cables, **characterized in that**
a. the cable ducting arrangement comprises a rotatably arranged ring (34) and a cover (22) comprising one or more cable openings (24),
b. the ring (34) encloses the aperture of the platform (10) and rests on a base fixed to the tower,
c. a flexible element (32) which is not permeable or poorly permeable to electromagnetic radiation connects the cover (22) and the ring (34),
d. wherein the ring (34) has a sliding apparatus (40, 42) which establishes an electrically conducting connection of the ring (34) to the base fixed to the tower.

2. The device according to Claim 1, **characterized in that** the aperture in the platform (10) is shielded by the cable ducting arrangement (34, 22) for electromagnetic radiation having a pre-determined frequency range, wherein the pre-determined frequency range comprises electromagnetic radiation in the megahertz range.

3. The device according to Claim 1 or 2, **characterized in that** the flexible element (32) is configured as an electrically conductive film or an electrically conductive textile part, in particular an electrically conductive textile woven fabric, knitted fabric, nonwoven fabric, crocheted fabric or the like.

4. The device according to any one of Claims 1 to 3, **characterized in that** the sliding apparatus comprises at least one sliding body (40), with which the ring (34) slides at a pre-defined distance on the base fixed to the tower.

5. The device according to any one of Claims 1 to 4, **characterized in that** the sliding apparatus comprises electrical sliding contacts (42) which establish the electrically conducting connection of the ring (34) and the base fixed to the tower.

6. The device according to any one of Claims 1 to 5, **characterized in that** the sliding contacts (42) consist of spring elements which lie in contact, under pressure, with the base fixed to the tower.

7. The device according to Claim 5 or 6, **characterized in that** the base fixed to the tower comprises an electrically conducting surface for the sliding contacts (42).

8. The device according to any one of Claims 1 to 7, **characterized in that** the cover (22) and the ring (34) are mechanically connected to one another by means of at least one suspension bracket (44) such that when the cover (22) is rotated a torque which rotates the ring (34) is transferred by means of the suspension bracket (44) to the ring (34).

9. The device according to any one of Claims 1 to 8, **characterized in that** the cover (22) comprises a circular disk which comprises at least one cable opening (24).

10. The device according to any one of Claims 1 to 9, **characterized in that** the flexible element (32) is held between the cover (22) and the ring (34) by means of at least one clamping ring (28, 36) which either rests on the cover (22) and clamps the flexible element (32) or rests on the ring (34) and clamps the flexible element (32).

11. The device according to Claim 10, **characterized in that** two clamping rings (28, 36) are provided, of which one is arranged on the cover (22) and one is arranged on the ring (34).

12. The device according to any one of Claims 1 to 11, **characterized in that** a cylindrical enclosure (12) is arranged on the aperture of the platform, wherein the cylindrical enclosure (12) comprises a flange (50) at its end pointing away from the platform (10), on which flange (50) the electrically conducting surface for the sliding contacts (42) is formed.

13. The device according to Claim 12, **characterized in that** the enclosure (12) comprises one or more vent holes (54), the largest dimension of which is smaller than a maximum size predefined by the frequency to be shielded.

14. The device according to any one of Claims 1 to 13, **characterized in that** the cover (22) is suspended on a central tube (20).

## Patentansprüche

1. Vorrichtung zur elektromagnetischen Abschirmung in einem Turm (110) einer Windturbine (100), die eine Plattform (10) aufweist, die das Innere des Turmes (110) schließt und eine Öffnung für ein oder mehrere Kabel aufweist, wobei eine Kabelführungsanordnung (34, 22) bereitgestellt ist, die in Bezug auf den Turm (110) mit dem Kabel oder den Kabeln schwenken kann, **dadurch gekennzeichnet, dass**
a. die Kabelführungsanordnung einen drehbar angeordneten Ring (34) und eine Abdeckung (22) umfasst, die eine oder mehrere Kabelöffnungen (24) umfasst,
b. der Ring (34) die Öffnung der Plattform (10) umschließt und auf einer turmfesten Basis ruht,
c. ein flexibles Element (32), das nicht durchlässig oder schlecht durchlässig für elektromagnetische Strahlung ist, die Abdeckung (22) und den Ring (34) verbindet,
d. wobei der Ring (34) eine Gleiteinrichtung (40, 42) aufweist, die eine elektrisch leitende Verbindung des Rings (34) mit der turmfesten Basis herstellt.

2. Vorrichtung nach Anspruch 1, **dadurch gekennzeichnet, dass** die Öffnung in der Plattform (10) durch die Kabelführungsanordnung (34, 22) für elektromagnetische Strahlung in einem vorbestimmten Frequenzbereich abgeschirmt ist, wobei der vorbestimmte Frequenzbereich elektromagnetische Strahlung im Megahertzbereich umfasst.

3. Vorrichtung nach Anspruch 1 oder 2, **dadurch gekennzeichnet, dass** das flexible Element (32) als eine elektrisch leitfähige Folie oder ein elektrisch leitfähiges Textilteil, insbesondere ein elektrisch leitfähiges Textilgewebe, Gestrick, Vlies, Gewirke oder dergleichen ausgestaltet ist.

4. Vorrichtung nach einem der Ansprüche 1 bis 3, **dadurch gekennzeichnet, dass** die Gleiteinrichtung mindestens einen Gleitkörper (40) umfasst, mit dem der Ring (34) in einem vordefinierten Abstand auf der turmfesten Basis gleitet.

5. Vorrichtung nach einem der Ansprüche 1 bis 4, **dadurch gekennzeichnet, dass** die Gleiteinrichtung elektrische Gleitkontakte (42) umfasst, die die elektrisch leitende Verbindung des Rings (34) und der turmfesten Basis herstellen.

6. Vorrichtung nach einem der Ansprüche 1 bis 5, **dadurch gekennzeichnet, dass** die Gleitkontakte (42) aus Federelementen bestehen, die unter Druck mit der turmfesten Basis in Kontakt liegen.

7. Vorrichtung nach Anspruch 5 oder 6, **dadurch gekennzeichnet, dass** die turmfeste Basis eine elektrisch leitende Oberfläche für die Gleitkontakte (42) aufweist.

8. Vorrichtung nach einem der Ansprüche 1 bis 7, **dadurch gekennzeichnet, dass** die Abdeckung (22) und der Ring (34) derart mittels mindestens einer Aufhängung (44) mechanisch miteinander verbunden sind, dass, wenn die Abdeckung (22) gedreht wird, ein Moment, das den Ring (34) dreht, mittels der Aufhängung (44) auf den Ring (34) übertragen wird.

9. Vorrichtung nach einem der Ansprüche 1 bis 8, **dadurch gekennzeichnet, dass** die Abdeckung (22) eine kreisförmige Scheibe umfasst, die mindestens eine Kabelöffnung (24) umfasst.

10. Vorrichtung nach einem der Ansprüche 1 bis 9, **dadurch gekennzeichnet, dass** das flexible Element (32) mittels mindestens eines Klemmrings (28, 36), der entweder auf der Abdeckung (22) ruht und das biegsame Element (32) einklemmt oder auf dem Ring (34) ruht und das biegsame Element (32) einklemmt, zwischen der Abdeckung (22) und dem Ring (34) gehalten wird.

11. Vorrichtung nach Anspruch 10, **dadurch gekennzeichnet, dass** zwei Klemmringe (28, 36) bereitgestellt sind, von denen einer auf der Abdeckung (22) angeordnet ist und einer auf dem Ring (34) angeordnet ist.

12. Vorrichtung nach einem der Ansprüche 1 bis 11, **dadurch gekennzeichnet, dass** eine zylindrische Umschließung (12) auf der Öffnung der Plattform angeordnet ist, wobei die zylindrische Umschließung (12) an ihrem Ende einen Flansch (50) umfasst, der von der Plattform (10) weg zeigt, wobei auf dem Flansch (50) die elektrisch leitende Oberfläche für die Gleitkontakte (42) gebildet ist.

13. Vorrichtung nach Anspruch 12, **dadurch gekennzeichnet, dass** die Umschließung (12) ein oder mehrere Luftlöcher (54) umfasst, deren größte Abmessung kleiner als eine durch die abzuschirmende Frequenz vorgegebene Höchstgröße ist.

14. Vorrichtung nach einem der Ansprüche 1 bis 13, **dadurch gekennzeichnet, dass** die Abdeckung (22) an einem mittigen Rohr (20) aufgehängt ist.

## Revendications

1. Dispositif de blindage électromagnétique dans une tour (110) d'une éolienne (100), lequel a une plate-forme (10) fermant l'intérieur de la tour (110) ayant une ouverture pour un ou plusieurs câbles, dans lequel un agencement de chemin de câble (34, 22) est prévu, lequel peut pivoter par rapport à la tour (110) avec le ou les câbles, **caractérisé en ce que**
a. l'agencement de chemin de câble comporte une bague (34) agencée de manière rotative et un capot (22) comportant une ou plusieurs ouvertures de câble (24),
b. la bague (34) enserre l'ouverture de la plate-forme (10) et repose sur une base fixée à la tour,
c. un élément flexible (32) qui n'est pas perméable ou est peu perméable aux rayonnements électromagnétiques relie le capot (22) et la bague (34),
d. dans lequel la bague (34) a un appareil coulissant (40, 42) qui établit une connexion électriquement conductrice de la bague (34) à la base fixée à la tour.

2. Dispositif selon la revendication 1, **caractérisé en ce que** l'ouverture dans la plate-forme (10) est blindée par l'agencement de chemin de câble (34, 22) pour un rayonnement électromagnétique ayant une plage de fréquences prédéterminée, dans lequel la plage de fréquences prédéterminée comporte un rayonnement électromagnétique dans la plage du mégahertz.

3. Dispositif selon la revendication 1 ou 2, **caractérisé en ce que** l'élément flexible (32) est conçu en tant que film électriquement conducteur ou pièce textile électriquement conductrice, en particulier un tissu tissé, un tissu tricoté, un tissu non tissé, un tissu crocheté ou autre en textile électriquement conducteur.

4. Dispositif selon l'une quelconque des revendications 1 à 3, **caractérisé en ce que** l'appareil coulissant comporte au moins un corps coulissant (40), avec lequel la bague (34) coulisse à une distance prédéfinie sur la base fixée à la tour.

5. Dispositif selon l'une quelconque des revendications 1 à 4, **caractérisé en ce que** l'appareil coulissant comporte des contacts coulissants électriques (42) qui établissent le raccordement électriquement conducteur de la bague (34) et de la base fixée à la tour.

6. Dispositif selon l'une quelconque des revendications 1 à 5, **caractérisé en ce que** les contacts coulissants (42) sont constitués d'éléments ressort qui reposent en contact, sous pression, avec la base fixée à la tour.

7. Dispositif selon la revendication 5 ou 6, **caractérisé en ce que** la base fixée à la tour comporte une surface électriquement conductrice pour les contacts coulissants (42).

8. Dispositif selon l'une quelconque des revendications 1 à 7, **caractérisé en ce que** le capot (22) et la bague (34) sont mécaniquement raccordés l'un à l'autre au moyen d'au moins une patte de suspension (44), de sorte que, lorsque le capot (22) est mis en rotation, un couple qui fait tourner la bague (34) soit transféré au moyen de la patte de suspension (44) à la bague (34).

9. Dispositif selon l'une quelconque des revendications 1 à 8, **caractérisé en ce que** le capot (22) comporte un disque circulaire qui comporte au moins une ouverture de câble (24).

10. Dispositif selon l'une quelconque des revendications 1 à 9, **caractérisé en ce que** l'élément flexible (32) est maintenu entre le capot (22) et la bague (34) au moyen d'au moins une bague de serrage (28, 36) qui soit repose sur le capot (22) et serre l'élément flexible (32), soit repose sur la base (34) et serre l'élément flexible (32).

11. Dispositif selon la revendication 10, **caractérisé en ce que** deux bagues de serrage (28, 36) sont prévues, dont une est agencée sur le capot (22) et l'autre est agencée sur la bague (34).

12. Dispositif selon l'une quelconque des revendications 1 à 11, **caractérisé en ce qu'une** enceinte cylindrique (12) est agencée sur l'ouverture de la plate-forme, dans lequel l'enceinte cylindrique (12) comporte une bride (50) au niveau de son extrémité pointant à l'opposé de la plate-forme (10), bride (50) sur laquelle est formée la surface électriquement conductrice pour les contacts coulissants (42).

13. Dispositif selon la revendication 12, **caractérisé en ce que** l'enceinte (12) comporte un ou plusieurs orifices d'aération (54), dont la plus grande dimension est inférieure à une taille maximum prédéfinie par la fréquence à blinder.

14. Dispositif selon l'une quelconque des revendications 1 à 13, **caractérisé en ce que** le capot (22) est suspendu sur un tube central (20).
